# EUROPÄISCHE PATENTSCHRIFT

(11) **EP 1 627 832 B1**
(45) Veröffentlichungstag und Bekanntmachung des Hinweises auf die Patenterteilung: **30.03.2011**
(21) Anmeldenummer: 05107649.5
(22) Anmeldetag: 19.08.2005
(51) Int. Cl.: B65G 25/06

(54) **Behälter für Schüttgut mit einer Schubeinrichtung**
Bunker for bulk material comprising a propulsive device
Conteneur pour matériaux en vrac comprenant un dispositif de déchargement

(30) Priorität: 20.08.2004 DE 102004040731; 11.11.2004 DE 102004054651
(43) Veröffentlichungstag der Anmeldung: 22.02.2006
(73) Patentinhaber: MT-Energie GmbH, 27404 Zeven (DE)
(72) Erfinder: Martens, Christoph, 27404 Rockstedt (DE)
(74) Vertreter: von Ahsen, Erwin-Detlef

(56) Entgegenhaltungen:
- CH-A5- 688 892
- DE-A1- 4 008 287
- US-A- 3 923 149
- US-A- 4 363 586
- US-A- 4 461 606
- US-B1- 6 513 648

## Beschreibung

Die Erfindung betrifft einen Lager- und/oder Transportbehälter für Schüttgut, insbesondere Schubbodenbunker, mit einem Boden, einer ersten, auf dem Boden angeordneten Austrageinrichtung für das Schüttgut und einer weiteren Austrageinrichtung mit quer zur ersten Austrageinrichtung verlaufen Förderrichtung.

Ein solcher Lager- und/oder Transportbehälter für Schüttgut, nämlich ein Schubbodenbunker, ist aus der DE 40 08 287A1 bekannt.

Schubbodenbunker werden häufig als Zwischenspeicher für Schüttgut verwendet. Selbstverständlich sind sie aber nicht auf diesen Anwendungsfall beschränkt. Vielmehr können sie auch als Transportbehälter, beispielsweise als landwirtschaftlicher Anhänger für Silage, als Wechselbehälter ähnlich einem Container oder als stationärer Lagerbehälter für alle Arten von Schüttgut, insbesondere (Gras-)Silage oder Festmist, vorteilhaft eingesetzt werden. Schubbodenbunker haben die Eigenschaft, Schüttgut gleichmäßig oder in geeigneten Mengen und Zeitabständen zu dosieren. Beispielsweise können Schubbodenbunker im Zusammenhang mit Biogasanlagen, Verbrennungsanlagen, Kompostieranlagen oder landwirtschaftlichen Betrieben (Futtersilo) angewendet werden. Ihre Aufgabe ist es dabei, in geeigneter Dosierung gleichmäßig oder in geeigneter Menge und Zeitabständen das in ihnen gelagerte Schüttgut ohne häufiges Nachfüllen des Schubbodenbunkers der nachfolgenden Anwendung, beispielsweise einem Biogasfermenter, zuzuführen.

Die DE 40 08 287A1 zeigt einen Schubbodenbunker mit zwei nebeneinander liegenden, leiterartigen Schubelementen, welche jeweils durch einen Hydraulikzylinder angetrieben sind. Die Schubelemente bzw. deren Sprossen arbeiten mit fest am Boden montierten Sprossen zusammen. Die beweglichen Förderelemente werden mittels der Hydraulikzylinder jeweils alternierend hin- und herbewegt. Der Bewegungszyklus des linken Schubelementes und des rechten Schubelementes zueinander gehen aus der Schrift nicht hervor. Auch ist in der Schrift nicht offenbart, die Hydraulikzylinder unabhängig voneinander anzusteuern. Der Schubbodenbunker weist einen Querförderer in Form einer Doppelschnecke auf, die unterhalb des Ausschubbodens liegt.

Als weitere Austragseinrichtung werden neben der oben genannten Doppelschnecke in der Praxis meist Förderschnecken verwendet. Diese Förderschnecken sind bei bekannten Schubbodenbunkern ebenfalls unterhalb des Bodens angeordnet. Dieses ist insbesondere bei Grassilage als Schüttgut von Nachteil, da Brückenbildungen oberhalb der Förderschnecke zum Verstopfen führen können. Dieses wird auch dadurch verstärkt, dass das Schüttgut nicht mit fremder Kraft gegen die Förderschnecke gefördert werden kann, sondern vielmehr durch Eigengewicht zwischen die Wendel der Förderschnecke fallen muss. Dieses führt nicht nur bei Grassilage, sondern auch bei leichten Schüttgütern zu Problemen. Schüttgut, welches einmal auf der Schnecke liegt, kann nicht mit Hilfe des Schubbodens zurückgezogen werden. Auch kann einer Überlastung der Förderschnecke nicht sofort entgegengetreten werden, sondern führt zunächst zum Ausfall der Anlage und das Schüttgut muss anderweitig von der Förderschnecke entfernt werden. Der Nachteil beim Stand der Technik besteht also zusammengefasst darin, dass die Gefahr von Verstopfungen des Austragssystems im Bereich der Förderschnecke gegeben ist.

Um dieses zu vermeiden ist der Lager- und/ oder Transportbehälter nach diesem Aspekt der Erfindung dadurch gekennzeichnet, dass die weitere Austragseinrichtung zumindest teilweise oberhalb des Bodens angeordnet ist.

Durch die erfindungsgemäße Gestaltung ist auf überraschend einfache Weise eine verstopfungsfreie Förderung des Schüttgutes gewährleistet. Da die weitere Austragseinrichtung, im allgemeinen eine Förderschnecke, zumindest teilweise oberhalb des Bodens, also in der Ebene der ersten Austrageinrichtung, welche im allgemeinen ein Schubboden ist, angeordnet ist, wird das Schüttgut mittels des Schuttbodens gegen die Schnecke und damit auch zwischen die Wendel der Förderschnecke gedrückt. Diese führt bei stark filzenden Schüttgütern, wie beispielsweise Grassilage dazu, dass Brücken auch zerrissen werden. Gesonderte Reißwalzen sind also nicht mehr erforderlich. Auch kommt es auf das Gewicht des Schüttgutes nicht mehr an. Dieses führt auch zu einer Entlastung der elektrischen Antriebe. Sollte es dennoch zu Verstopfungen im Bereich der Förderschnecke kommen, kann durch umkehr der Förderrichtung der Förderschnecke und des Schubbodens die Förderschnecke wieder gesäubert werden. Dieses ist insbesondere dann der Fall, wenn die Förderschnecke vollständig oberhalb des Bodens angeordnet ist.

Die Erfindung wird nachfolgend anhand von in der Zeichnung dargestellten Ausführungsbeispielen näher erläutert. Es zeigen:

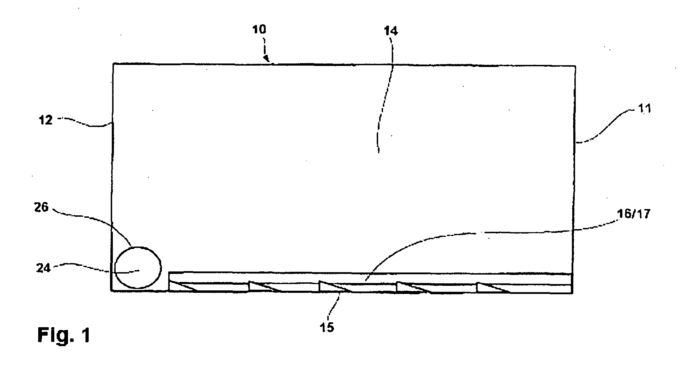

- Fig. 1: ein Ausführungsbeispiel für einen Behälter mit den Erfindungsmerkmalen im Vertikalschnitt.

Der in Fig. 1 gezeigte Schubbodenbunker 10 weist einen Boden 15, Seitenwände 14, eine Rückwand 11 und eine Vorderwand 12 auf. Auf dem Boden 15 ist ein sogenannter und aus dem Stand der Technik bekannter Schubboden 16, 17 angeordnet, welcher durch hin- und herbewegen auf dem Boden 15 ein in den Schubbodenbunker 10 eingefülltes Schüttgut in Richtung auf die Vorderwand 12 austrägt. Der Schubboden 16, 17 ist dabei etwas kürzer bemessen, als der Boden 15. In einem freien Zwischenraum zwischen dem Schubboden 16, 17 und der Vorderwand 12 ist eine Förderschnecke 24 mit quer zur Förderrichtung des Schubbodens 16, 17 verlaufender Förderrichtung angeordnet. Das heißt, die Längsachse der Förderschnecke 24 ist quer zur Förderrichtung des Schubbodens 16, 17 angeordnet.

Wie in gut zu erkennen ist, ist die Förderschnecke 24 vollständig oberhalb des Bodens 15 angeordnet. Mit anderen Worten, eine gedachte Mantelfläche 26 der Förderschnecke 24 unterschneidet den Boden 15 nicht. Vielmehr ist sie mit einem schmalen Spalt oberhalb des Bodens 15 angeordnet.

### Bezugszeichenliste:

- 10: Schubbodenbunker
- 11: Rückwand
- 12: Vorderwand
- 13: Ausschuböffnung
- 14: Seitenwand
- 15: Boden
- 16: Schubelement
- 17: Schubelement
- 18: Schubstange
- 19: Sprosse
- 20: Schubstange
- 21: Sprosse
- 22: Steg
- 23: Druckmittelzylinder
- 24: Schnecke
- 25: Reiswalze
- 26: Mantelfläche

## Patentansprüche

1. Lager- und/oder Transportbehälter für Schüttgut, insbesondere Schubbodenbunker (10), mit einem Boden (15), einer ersten, auf dem Boden (15) angeordneten Austrageinrichtung, vorzugsweise einem Schubboden (16, 17), für das Schüttgut und einer weiteren Austrageinrichtung mit quer zur ersten Austrageinrichtung verlaufender Förderrichtung, **dadurch gekennzeichnet daß** die weitere Austrageinrichtung zumindest teilweise oberhalb des Bodens (15) angeordnet ist.

2. Behälter nach Anspruch 1, **dadurch gekennzeichnet, daß** die weitere Austrageinrichtung ejne Förderschnecke (24) ist, insbesondere mit einer oberhalb des Bodens (15) angeordneten Längsachse, vorzugsweise derart, daß eine gedachte Mantelfläche (26) der Förderschnecke (24) den Boden (15) nicht unterschneidet.

## Claims

1. Storage and/or transport container for bulk material, especially a sliding floor bunker (10), with a floor (15), a first discharge device arranged on the floor (15), preferably a sliding floor (16, 17), for the bulk material and a further discharge device having a conveying direction running crosswise to the first discharge device, **characterised in that** the further discharge device is at least partially arranged above the floor (15).

2. Container according to Claim 1, **characterised in that** the further discharge device is a screw conveyor (24), in particular with a longitudinal axis arranged above the floor (15), preferably in such a way that an imaginary outside surface (26) of the screw conveyor (24) does not undercut the floor (15).

## Revendications

1. Conteneur et/ou benne de stockage de vrac, notamment, contenant à fond mobile (10) avec un fond (15) avec un premier dispositif de poussée et d'évacuation placé sur le fond (10), préférentiellement un fond mobile (16,17) pour le vrac, avec en deuxième système d'évacuation disposé transversalement, **caractérisé en ce que** ce système d'extraction est disposé du moins pour partie au-dessus du fond (15).

2. Conteneur selon revendication 1, **caractérisé en ce que** le système d'évacuation consiste en vis sans fin (24) pour l'extraction, avec en particulier un axe de rotation disposé au-dessus du fond (15), de manière telle que et préférentiellement qu'une surface périphérique et couvrante formant manteau (26) voulue de la vis d'extraction (24) ne recoupe pas le fond (15) dans sa partie inférieure.
